# EUROPÄISCHE PATENTSCHRIFT

(11) **EP 3 201 050 B1**
(45) Veröffentlichungstag und Bekanntmachung des Hinweises auf die Patenterteilung: **18.07.2018**
(21) Anmeldenummer: 15771121.9
(22) Anmeldetag: 30.09.2015
(51) Int. Cl.: B60R 22/18, A44B 11/25

(54) **SCHLOSSZUNGE MIT EINEM TORSIONSSTAB**
BUCKLE TONGUE WITH A TORSION STICK
LANGUETTE DE BOUCLE MUNIE D'UNE BARRE DE TORSION

(30) Priorität: 30.09.2014 DE 102014114207
(43) Veröffentlichungstag der Anmeldung: 09.08.2017
(73) Patentinhaber: Autoliv Development AB, 447 83 Vårgårda (SE)
(72) Erfinder: HERMANN, Michel, 25421 Pinneberg (DE)
(74) Vertreter: Feucker, Max Martin
(86) Internationale Anmeldenummer: PCT/EP2015/072514
(87) Internationale Veröffentlichungsnummer: WO 2016/050820

(56) Entgegenhaltungen:
- WO-A1-2014/013987
- WO-A1-2015/140341
- WO-A1-2015/172879
- DE-T5-112012 002 030
- DE-U1-202010 013 986

## Beschreibung

Die vorliegende Erfindung betrifft eine Schlosszunge mit einem sich in eine Einsteckrichtung erstreckenden Zungenkörper, in dem ein Klemmelement derart angeordnet ist, dass ein durch eine Ausnehmung in dem Zungenkörper geführtes und durch einen zwischen dem Klemmelement und dem Zungenkörper ausgebildeten Spalt verlaufendes Gurtband in einer unbelasteten Durchlaufstellung durch den Zungenkörper beweglich und in einer durch eine in das Gurtband eingeleitete Zugkraft herbeigeführten Belastungsstellung mittels des schwenkbar in dem Zungenkörper gelagerten, in die Ausnehmung hinein schwenkbaren Klemmelementes an einer Klemmkante der Ausnehmung geklemmt ist, wobei in der Belastungsstellung eine Vorspanneinrichtung auf das Klemmelement eine in Richtung der Durchlaufstellung des Klemmelements gerichtete Rückstellkraft ausübt.

Eine Schlosszunge mit den vorgenannten Merkmalen ist beispielsweise aus DE 20 2010 013 986 U1 bekannt. Ein als Sperrnocken bezeichnetes Klemmelement ist schwenkbar in dem Zungenkörper gelagert, wobei eine Feder als Vorspanneinrichtung vorgesehen ist, die das schwenkbar in dem Zungenkörper gelagerte Klemmelement in eine Durchlaufstellung mit einer Kraft beaufschlagt. In einer Belastungsstellung wird das durch eine Ausnehmung im Zungenkörper verlaufende Gurtband zwischen dem Klemmelement und einer an der Ausnehmung ausgebildeten, parallel zur Oberfläche des Gurtbandes verlaufenden Klemmkante geklemmt. Es hat sich nun herausgestellt, dass das Gurtband in gewissen Situationen auch an den seitlichen Bereichen des Klemmelementes zwischen dem Klemmelement und einer seitlichen Kante der Ausnehmung eingeklemmt wird, wobei das Gurtband abgeknickt wird. Hieraus resultiert der Nachteil, dass in einer Belastungsstellung die von der Feder aufgebrachte Kraft nicht ausreicht, um die durch das seitlich eingeklemmte Gurtband verursachte Blockierstellung zu lösen.

Weitere Schlosszungen mit den eingangs genannten Merkmalen sind aus DE 20 2010 013968 U1, DE 11 2012 002030 T5 und WO 2014/013987 A1 bekannt, bei denen Torsionsfedern als Vorspanneinrichtungen ausgebildet sind, die allerdings keine ausreichend große Rückstellkraft bereitstellen. Aufgabe der vorliegenden Erfindung ist es daher, die mit Bezug zum Stand der Technik geschilderten Probleme zumindest teilweise zu lösen und insbesondere eine Schlosszunge anzugeben, bei der die Blockierstellung des Gurtbandes zwischen dem Klemmelement und einer seitlichen Kante der Ausnehmung gelöst werden kann.

Gelöst werden diese Aufgaben mit einer Schlosszunge mit den Merkmalen des unabhängigen Anspruches. Vorteilhafte Weiterbildungen der Schlosszunge sind in den abhängigen Ansprüchen und in der Beschreibung angegeben, wobei Merkmale der bevorzugten Weiterbildungen in technologisch sinnvoller Weise beliebig miteinander kombinierbar sind.

Gelöst werden diese Aufgaben durch eine Schlosszunge mit den eingangs genannten Merkmalen, bei der die Vorspanneinrichtung ein drehfest in dem Zungenkörper befestigter und drehfest mit dem Klemmelement verbundener Torsionsstab ist, der beim Verschwenken des Klemmelements um seine Längsachse elastisch verdreht wird. Insbesondere ist das Klemmelement mittels des Torsionsstabs schwenkbar gelagert. Alternativ ist das Klemmelement nicht mittels des Torsionsstabs schwenkbar gelagert. Der Zungenkörper weist also eine Ausnehmung auf, durch die das Gurtband geführt ist. Der Zungenkörper umfasst insbesondere einen metallischen Kern und ein an den Kern angespritztes Kunststoffteil. Ferner weist der Zungenkörper ein Klemmelement auf, welches schwenkbar an dem Zungenkörper gelagert ist, wobei das Klemmelement insbesondere einen Klemmbereich aufweist, der zumindest in der Belastungsstellung mit dem Gurtband in Anlage kommt. In der unbelasteten Durchlaufstellung ist der insbesondere zwischen dem Klemmbereich des Klemmelements und einer insbesondere parallel zu dem Klemmbereich und der Gurtbandoberfläche verlaufenden Klemmkante der Ausnehmung ausgebildete Spalt ausreichend groß, dass das Gurtband frei durch den Spalt beweglich ist.

Wird nun bei in ein Gurtschloss eingesteckter Gurtzunge eine Zugkraft, insbesondere in einen Beckengurtabschnitt des Gurtbandes eingeleitet, so wird das Klemmelement von dem Gurtband so mit Kraft beaufschlagt, dass das Klemmelement verschwenkt und folglich der Spalt zwischen dem Klemmbereich des Klemmelements und der Klemmkante der Ausnehmung verkleinert wird, wobei insbesondere der Klemmbereich des Klemmelements in die Ausnehmung hinein geschwenkt wird. Ist die in den Beckengurt eingeleitete Kraft groß genug, wird das Gurtband zwischen dem Klemmbereich des Klemmelements und der Klemmkante der Ausnehmung in der Ausnehmung festgeklemmt.

Der Torsionsstab übt zumindest in der Belastungsstellung eine Rückstellkraft auf das Klemmelement aus. Der Torsionsstab wird beim Verschwenken des Klemmelementes von der Durchlaufstellung in die Belastungsstellung, bei der das Klemmelement insbesondere um maximal 60°, bevorzugt maximal 40° verschwenkt wird, elastisch verdreht. Der Torsionsstab ist hierzu aus einem geeigneten Material gebildet. Bei der durch das Verschwenken des Klemmelements erzeugten, zumindest in Teilabschnitten erfolgten Verdrehung des Torsionsstabs um seine Längsachse, bei der ein Torsionsmoment auf den Torsionsstab wirkt, stellt der Torsionsstab also ein dem Torsionsmoment entgegengerichtetes Drehmoment bereit, welches in die Rückstellkraft auf das Klemmelement resultiert. Der Torsionsstab kann einstückig mit dem Klemmelement ausgeführt sein oder ein einzelnes Bauteil der Schlosszunge sein. Der Torsionsstab kann eine vergleichsweise große Rückstellkraft erzeugen.

Der Torsionsstab kann zudem eine weitere Funktion haben. In diesem Fall ist das Klemmelement mittels des Torsionsstabes schwenkbar in dem Zungenkörper gelagert. Es sind dann insbesondere keine weiteren Vorkehrungen zur Schwenklagerung des Torsionsstabes in dem Zungenkörper getroffen.

Insbesondere wenn das Klemmelement ein einzelnes Bauteil der Schlosszunge bildet, ist der Torsionsstab nur an einer Seite des Zungenkörpers drehfest befestigt und nur an der Seite des Klemmelements mit dem Klemmelement verbunden, welche nicht der mit dem Torsionsstab befestigten Seite des Zungenkörpers zugeordnet ist. Durch die an verschiedenen Seiten der Schlosszunge ausgeführte Befestigung des Torsionsstabes an dem Zungenkörper und dem Klemmelement weist der bei einer Verschwenkung des Klemmelements verdrehte Bereich des Torsionsstabes eine maximale Länge auf, wodurch auch eine elastische (Dreh-)Verformung des Torsionsstabes über den möglichen Winkelbereich gegeben ist.

Um zu vermeiden, dass das Gurtband zwischen eine seitliche Kante der Ausnehmung und das Klemmelement gelangt, kann vorgesehen sein, dass seitlich an dem Klemmelement Führungsabschnitte angeordnet sind, zwischen denen das Gurtband verläuft, so dass das Gurtband im seitlichen Bereich der Ausnehmung nicht zwischen das Klemmelement und den Zungenkörper gelangt, wobei die Ausnehmung seitlich von der Klemmkante ausgebildete, in Einsteckrichtung ausgerichtete Aussparungen umfasst, in denen die Führungsabschnitte des Klemmelements zumindest in der Belastungsstellung angeordnet sind. Es sind also seitlich an dem Klemmelement insbesondere über den Klemmbereich des Klemmelementes hervorstehende Führungsabschnitte angeordnet. Die Führungsabschnitte erstrecken sich insbesondere in eine Richtung über den Klemmbereich des Klemmelements hinaus, auf der das Gurtband durch den Zungenkörper sowohl in der Durchlaufstellung als auch in der Belastungsstellung geführt ist. Folglich ist das Gurtband seitlich von den Führungsabschnitten begrenzt und kann insbesondere nicht in Anlage mit den seitlichen Kanten der Ausnehmung gelangen.

Damit das Gurtband insbesondere im Bereich der Klemmkante der Ausnehmung seitlich von den Führungsabschnitten begrenzt ist, greifen die Führungsabschnitte des Klemmelements in der Belastungsstellung in die Aussparungen ein oder sind insbesondere auch schon in der Durchlaufstellung in den Aussparungen angeordnet, die sich seitlich von der Klemmkante in Richtung der Einsteckrichtung erstrecken und somit einen Bereich der Ausnehmung bilden. Durch die sich in die Einstreckrichtung erstreckenden Aussparungen kann die Bauhöhe der Schlosszunge in Einsteckrichtung reduziert werden.

Die Führungsabschnitte weisen insbesondere jeweils einen kreisbogenförmigen Rand auf, der zumindest in der Belastungsstellung in der Aussparung angeordnet ist, aber nicht über den Zungenkörper hervorsteht.

Die oben genannten Aufgaben würden auch unabhängig von den zuvor beschriebenen Ausführungsformen und insbesondere unabhängig von der Ausbildung von Führungsabschnitten am Klemmelement dadurch gelöst, dass an dem Zungenkörper mindestens ein in die Ausnehmung hineinragender Vorsprung und an dem Klemmelement mindestens eine Nut ausgebildet ist, in die der Vorsprung zumindest während der Schwenkbewegung eingreift, so dass in der Belastungsstellung der Vorsprung an einer Stirnfläche der Nut in Anlage mit dem Klemmelement kommt und dadurch die Schwenkbewegung des Schwenkelements begrenzt ist.

Der Vorsprung ist insbesondere an der der Klemmkante der Ausnehmung gegenüberliegenden Seite der Ausnehmung ausgebildet. Der Vorsprung bildet einen Anschlag für die Schwenkbewegung des Klemmelements, wodurch in der Belastungsstellung bei Erhöhung der in das Gurtband eingeleiteten Kraft die auf das Gurtband wirkende Kraft begrenzt wird, da nach Anlage der Stirnflächen der Nut an dem Vorsprung die Kraft in den Zungenkörper eingeleitet wird und eine weitere Verschwenkung des Klemmelements nicht mehr erfolgt. Folglich könnte eine Selbstklemmung des Gurtbandes in der Befestigungsstellung vermieden werden und bei einer Ausbildung ohne Führungsabschnitte am Klemmelement die Blockierkraft von einem zwischen das Klemmelement und der seitlichen Kante der Ausnehmung gelangten Bestandteil des Gurtbandes begrenzt sein. Folglich wäre trotz der Klemmung des Gurtbandes zwischen Klemmelement und seitlicher Kante der Ausnehmung eine Reversibilität aus der Blockierstellung in die Durchlaufstellung möglich.

Gemäß einer weiteren Ausführungsform der Schlosszunge steht von beiden Führungsabschnitten seitlich jeweils ein Führungselement hervor, die in den Torsionsstab aufnehmenden Aufnahmen zumindest teilweise umgebenden oder an den Aufnahmen angrenzenden Führungsvertiefungen in dem Zungenkörper angeordnet sind, wobei die Führungselemente und die Führungsvertiefungen so geformt sind, dass die Schwenkbewegung des Klemmelements von den in den Führungsvertiefungen bewegten Führungselementen geführt ist. Durch eine solche Ausgestaltung kann eine zusätzliche oder alternative Schwenklagerung ausgebildet sein, wobei die Führungsvertiefungen bevorzugt auch einen Anschlag für die Schwenkbewegung des Klemmelementes ausbilden. Insbesondere wenn das Klemmelement nicht mittels des Torsionsstabs schwenkbar gelagert ist, ist bevorzugt, dass von den beiden Führungsabschnitten seitlich jeweils kein Führungselement hervorsteht und dass keine den Torsionsstab aufnehmenden Aufnahmen zumindest teilweise umgebende Führungsvertiefungen in dem Zungenkörper angeordnet sind. Das Klemmelement ist bevorzugt vorwiegend über die in die Führungsvertiefungen eingreifenden Führungselemente schwenkbar an dem Schlosskörper gelagert, so dass der Torsionsstab vorwiegend zur Bereitstellung der Rückstellkraft vorgesehen ist und kaum Einfluss auf die Schwenklagerung hat.

In diesem Zusammenhang kann vorgesehen sein, dass sich an die Führungsvertiefungen jeweils eine geradlinige, bis zu einem Rand des Zungenkörpers erstreckende Montagevertiefung anschließt, durch welche das Klemmelement während der Montage mit den Führungselementen linear verschoben wird, wobei das Klemmelement durch anschließendes Verschwenken gegen eine Rückverschiebung gesichert wird. Nach dem Verschwenken ist eine Projektion der Führungselemente auf die jeweiligen Montagevertiefungen größer als die Breite der entsprechenden Montagevertiefungen, so dass die Führungselemente nicht zurück in die Montagevertiefung gelangen können. In einem solchen verschwenkten Zustand kann insbesondere der Torsionsstab durch das Klemmelement eingeführt werden, so dass auch nach einem Rückverschwenken das Klemmelement gegen eine Rückverschiebung durch die Montagevertiefung gesichert ist. In diesem Fall hat der Torsionsstab zwei Funktionen. Er sichert zum einen das Klemmelement gegen eine Rückverschiebung und stellt zum anderen eine Rückstellkraft beim Verschwenken des Klemmelements bereit. Somit ist auch eine einfache Montage des Klemmelements und des Torsionsstabs möglich.

Gemäß einer Ausgestaltung der Schlosszunge ist vorgesehen, dass das Gurtband quer zur Einsteckrichtung einfach durch die Ausnehmung in dem Zungenkörper gezogen ist, womit gemeint ist, dass das Gurtband nur einmal durch den Zungenkörper, nämlich durch die Ausnehmung im Zungenkörper geführt ist und sich somit von einer Vorderseite der Schlosszunge zu einer Rückseite der Schlosszunge durch den Zungenkörper erstreckt. Hiermit ist insbesondere ausgeschlossen, dass das Gurtband im Bereich der Schlosszunge eine Schlaufe bildet, wobei das Gurtband von derselben Seite in die Schlosszunge eingeführt wäre in die es auch herausgeführt wäre.

In einer bevorzugten Ausführungsform übt der Torsionsstab bereits in der Durchlaufstellung eine entgegen der Belastungsstellung gerichtete Kraft auf das Klemmelement aus. Hierdurch wird erreicht, dass das Klemmelement jederzeit in eine Stellung vorgespannt wird, wodurch Klappergeräusche vermieden werden können.

In diesem Zusammenhang ist insbesondere vorgesehen, dass eine den Torsionsstab am Zungenkörper drehfestlegende Aufnahme und der Torsionsstab so ausgebildet sind, dass ein in der Aufnahme festzulegendes erstes Ende des Torsionsstabes zum Festlegen an dem Zungenkörper gegenüber dem an dem Klemmelement drehfestgelegten zweiten Ende verdreht werden muss, während sich das Klemmelement in der Durchlaufstellung befindet. Zur Montage wird also das Klemmelement zunächst in den Zungenkörper eingesetzt und so ausgerichtet, dass der Torsionsstab mit dem zweiten Ende durch die Aufnahme in dem Zungenkörper hindurch in einen Kanal in dem Torsionsstab eingeführt werden kann. Der Torsionsstab und der Kanal in dem Klemmelement sind zumindest bereichsweise so ausgebildet, dass sie nicht relativ zueinander verdreht werden können. Wenn der Torsionsstab mit seinem zweiten Ende in diesen Bereich eingeschoben ist, muss das erste Ende des Torsionsstabes gegenüber dem in dem Klemmelement festgelegten zweiten Ende unter Ausbildung eines Torsionsmoments in dem Torsionsstab verdreht werden, bis das erste Ende in die entsprechende Aufnahme in dem Zungenkörper eingeführt werden kann. Durch das vorliegende Torsionsmoment im Torsionsstab wird eine Vorspannung auf das Klemmelement gebracht. Der Torsionsstab muss insbesondere nach dem gegenseitigen Verdrehen des ersten und zweiten Endes noch axial in die entsprechende Aufnahme im Zungenkörper geschoben werden.

Um zu ermöglichen, dass der Torsionsstab alleine durch axiales Einschieben in die Schlosszunge eine Vorspannung in der Durchlaufstellung ausübt und dass bei der Montage ein aktives Verdrehen des Torsionsstabes entfallen kann, kann vorgesehen sein, dass der Torsionsstab an dem in der Aufnahme festzulegenden ersten Ende eine erste Querschnittskontur aufweist, die einer zweiten Querschnittskontur des in dem Klemmelement drehfestgelegten zweiten Endes der Querschnittsform entspricht, wobei in einem entspannten Zustand des Torsionsstabes die Querschnittskonturen der beiden Enden um eine Rotationsachse rotiert zueinander sind und der Übergang von der ersten Querschnittskontur zur zweiten Querschnittskontur unter Beibehaltung der Querschnittsform kontinuierlich ist, so dass der Torsionsstab bei in dem Klemmelement drehfestgelegten zweiten Ende ausschließlich durch Einschieben des ersten Endes in die Aufnahme verdreht wird. Es ist also vorgesehen, dass der Torsionsstab in einem noch nicht eingesetzten Zustand in seiner Längserstreckung eine verdrillte Form aufweist, welche beim Einschieben des Torsionsstabes in das Klemmelement und in die Aufnahme im Zungenkörper zwangsweise entdrillt wird, wodurch ein Torsionsmoment in dem Torsionsstab induziert wird, welches das Klemmelement mit einer Kraft in die Durchlaufstellung beaufschlagt.

Die Erfindung sowie das technische Umfeld werden nachfolgend anhand der Figuren beispielhaft erläutert. Es zeigen schematisch
- Fig. 1:: eine Explosionsansicht einer ersten Ausführungsform einer Schlosszunge,
- Fig. 2:: eine Rückseite der Schlosszunge,
- Fig. 3:: einen Ausschnitt der Schlosszunge,
- Fig. 4:: eine Vorderseite der Schlosszunge,
- Fig. 5:: eine Schnittdarstellung durch die Schlosszunge in einer Durchlaufstellung,
- Fig. 6:: eine Schnittansicht der Schlosszunge in einer Belastungsstellung,
- Fig. 7:: eine Vorderansicht einer zweiten Ausführungsform einer Schlosszunge,
- Fig. 8:: ein Torsionsstab der zweiten Ausführungsform der Schlosszunge,
- Fig. 9 - 11:: Detailansichten der zweiten Ausführungsform der Schlosszunge,
- Fig. 12:: eine Explosionsansicht einer dritten Ausführungsform der Schlosszunge,
- Fig. 13:: eine Schnittansicht durch die dritte Ausführungsform der Schlosszunge,
- Fig. 14:: eine weitere Schnittansicht durch die dritte Ausführungsform der Schlosszunge,
- Fig. 15:: einen Torsionsstab einer vierten Ausführungsform der Schlosszunge,
- Fig. 16:: die vierte Ausführungsform der Schlosszunge,
- Fig. 17:: den Montageablauf der vierten Schlosszunge und
- Fig. 18:: eine Detailansicht einer fünften Ausführungsform der Schlosszunge.

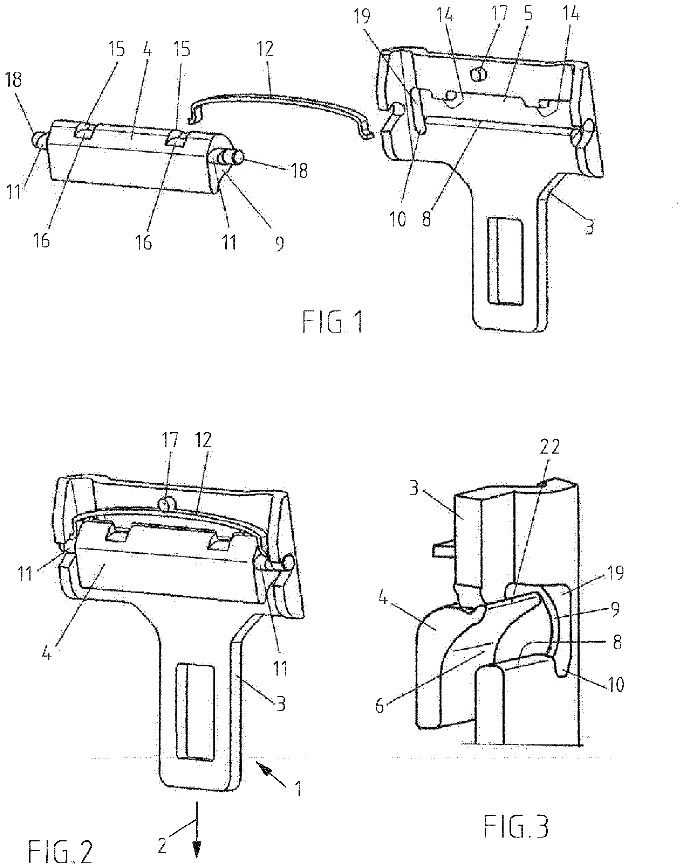

Die in den Figuren 1 bis 4 dargestellte erste Ausführungsform einer Schlosszunge 1 dient zur Erläuterung der Funktionsweise der Schlosszunge 1, weist aber nicht alle beanspruchten Merkmale auf. Die Schlosszunge 1 umfasst einen Zungenkörper 3, der sich in eine Einsteckrichtung 2 erstreckt. In dem Zungenkörper 3 ist eine Ausnehmung 5 ausgebildet, die in Einsteckrichtung 2 nach unten abschnittsweise von einer Klemmkante 8 begrenzt ist. Seitlich der Klemmkante 8 erstrecken sich Aussparungen 10 in Einsteckrichtung 2. Auf der der Klemmkante 8 gegenüberliegenden Seite der Ausnehmung 5 sind in die Ausnehmung 5 hineinragende Vorsprünge 14 an dem Zungenkörper 3 ausgebildet. An dem Zungenkörper 3 ist ferner eine Haltestelle 17 ausgebildet, an der eine Blattfeder 12 mit ihrem mittleren Bereich in Anlage gebracht wird.

Die Schlosszunge 1 umfasst ferner ein Klemmelement 4, das mit Lagerstiften 18 schwenkbar in dem Zungenkörper 3 gelagert ist. Benachbart zu den Lagerstiften 18 ist jeweils ein sich in einer Richtung verjüngender Nocken 11 ausgebildet. Im montierten Zustand liegen die Enden der Blattfeder 12 auf den Nocken 11 auf, so dass ein Drehmoment in das Klemmelement 4 eingeleitet wird.

Das Klemmelement 4 weist ferner Nuten 15 mit Stirnflächen 16 auf, in denen die Vorsprünge 14 im montierten Zustand der Schlosszunge 1 angeordnet sind.

Das Klemmelement 4 umfasst ferner im seitlichen Bereich Führungsabschnitte 9, die im montierten Zustand zumindest teilweise in der Aussparung 10 der Ausnehmung 5 angeordnet sind. Wie insbesondere aus Figur 3 hervorgeht, ist zwischen einem Klemmbereich 22 des Klemmelementes 4 und der Klemmkante 8 der Aussparung 5 ein Spalt 6 ausgebildet, durch den ein Gurtband 7 führbar ist. Dieser Spalt 6 wird auf beiden Seiten von den Führungsabschnitten 9 des Klemmelements 4 begrenzt, so dass das Gurtband 7 zwischen den Führungsabschnitten 9 angeordnet ist. Das Gurtband 7 kann somit nicht zwischen das Klemmelement 4 und eine seitliche Kante 19 der Ausnehmung 5 gelangen.

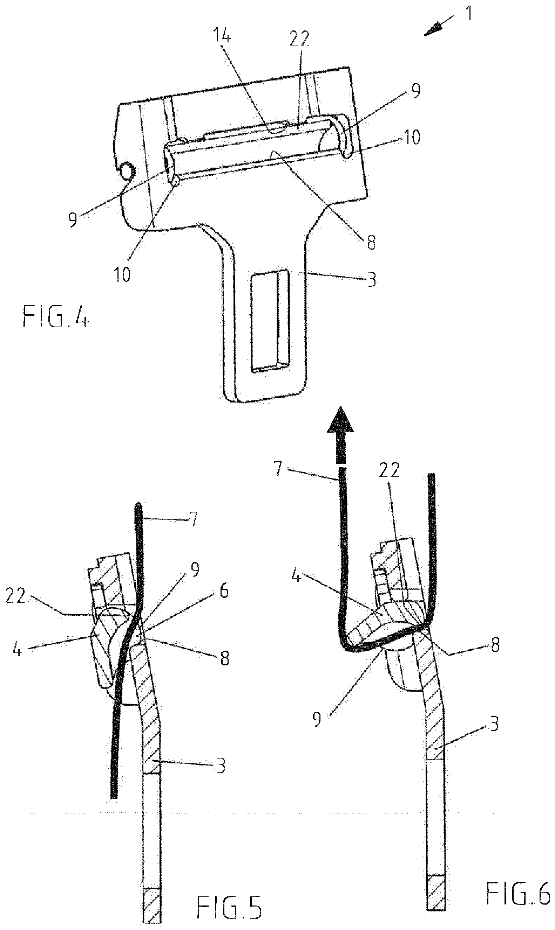

Wie aus Figur 5 ersichtlich ist, ist in einer Durchlaufstellung der zwischen dem Klemmbereich 22 des Klemmelements 4 und der Klemmkante 8 der Ausnehmung 5 gebildete Spalt 6 ausreichend groß, dass das Gurtband 7 frei beweglich ist. Das Gurtband 7 wird dabei seitlich von den Führungsabschnitten 9 begrenzt.

Wird nun eine Kraft in einen Beckengurtabschnitt des Gurtbandes 7 eingeleitet, so wird durch diese Kraft das Klemmelement 4 verschwenkt, so dass sich der Spalt 6 verkleinert, bis schließlich das Gurtband 7 zwischen dem Klemmbereich 22 des Klemmelements 4 und der Klemmkante 8 festgeklemmt ist und so eine Belastungsstellung erreicht ist, wie sie in Figur 6 dargestellt ist. In dieser Belastungsstellung gelangt zudem die Stirnfläche 16 der Nut 15 in Anschlag mit den Vorsprüngen 14, wodurch die auf das Gurtband 7 wirkende Kraft begrenzt ist.

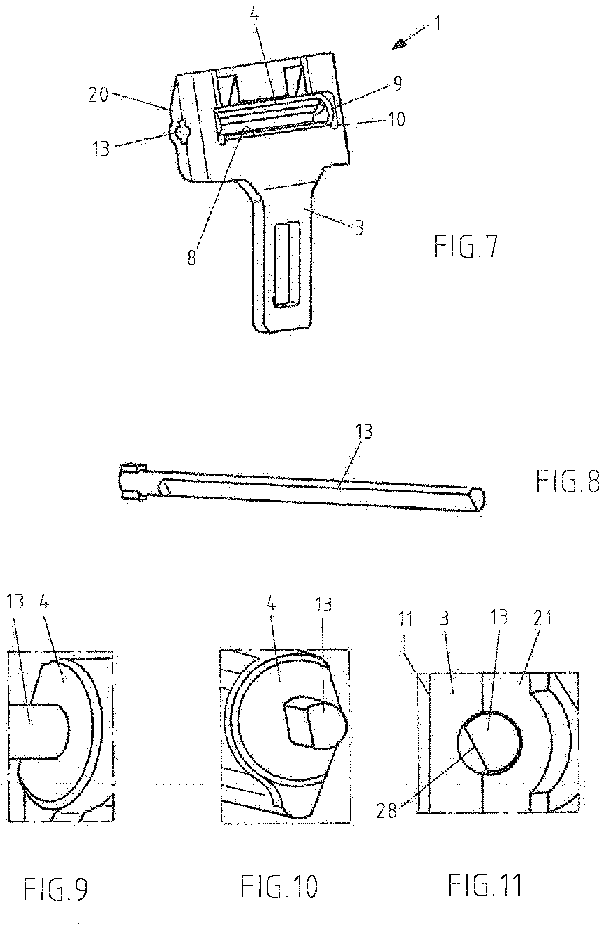

In Figur 7 ist eine zweite, alle erfindungswesentliche Merkmale aufweisende Ausführungsform einer Schlosszunge 1 dargestellt, die sich zu der ersten Ausführungsform in der schwenkbaren Lagerung des Klemmelements 4 und der Aufbringung einer Rückstellkraft unterscheidet, wobei darüber hinaus die Funktion des Klemmelements 4 und der daran angebrachten Führungsabschnitte 9 identisch zu der ersten Ausführungsform ist, so dass im Folgenden lediglich auf die Unterschiede eingegangen wird.

Gemäß der zweiten Ausführungsform ist das Klemmelement 4 mittels eines elastisch verformbaren Torsionsstabes 13 schwenkbar an dem Zungenkörper 3 gelagert, wobei der Torsionsstab 13 zugleich in der Belastungsstellung eine Rückstellkraft auf das Klemmelement 4 ausübt. Der Torsionsstab 13 ist hierzu an einer ersten Seite 20 drehfest durch einen Formschluss in einer Aufnahme 28 an dem Zungenkörper 3 befestigt. Auf der der ersten Seite 20 gegenüberliegenden Seite 21 des Zungenkörpers 3 ist der durch das gesamte Klemmelement 4 geführte Torsionsstab 13 drehbar in einer Aufnahme 28 in dem Zungenkörper 3 gelagert, wie aus Figur 11 ersichtlich ist.

Damit der in Figur 8 dargestellte Torsionsstab 13 während einer Schwenkbewegung des Klemmelements 4 über eine möglichst große Länge verformt (verdreht) werden kann, ist der Torsionsstab 13 lediglich auf einer der zweiten Seite 21 des Zungenkörpers 3 zugeordneten Seite des Klemmelements 4 mit dem Klemmelement 4 durch einen durch die Aufnahme 28 bedingten Formschluss drehfest verbunden, wie es in Figur 10 dargestellt ist. Aus Figur 9 ist insoweit ersichtlich, dass der Torsionsstab 13 auf der der ersten Seite 20 des Zungenkörpers 3 zugeordneten Seite des Klemmelements 4 drehbar zu dem Klemmelement 4 in der Aufnahme 28 angeordnet ist.

Wird nun das Klemmelement 4 aus seiner Durchlaufstellung in seine Belastungsstellung verschwenkt, wird der Torsionsstab 13 zwischen der drehfesten Befestigung an der ersten Seite 20 des Klemmelements 4 und der drehfesten Verbindung des Torsionsstabs 13 mit dem Klemmelement 4 über fast seine gesamte Länge verdreht, wobei durch die daraus resultierende elastische Verformung des Torsionsstabs 13 eine Rückstellkraft auf das Klemmelement 4 ausgeübt wird.

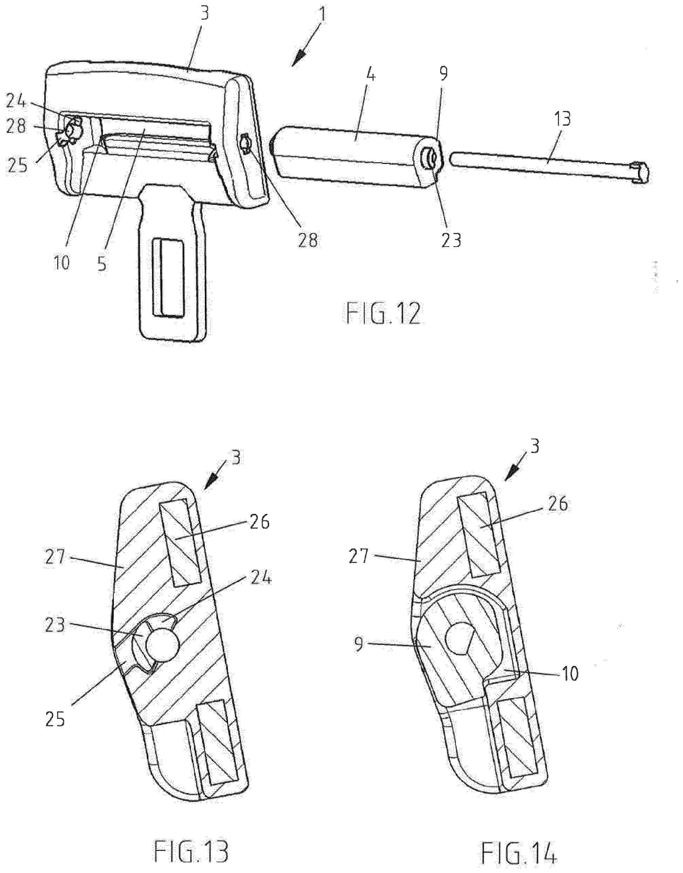

In Figur 12 ist eine dritte, alle erfindungswesentlichen Merkmale aufweisende Ausführungsform einer Schlosszunge 1 dargestellt, wobei das Funktionsprinzip der Schlosszunge 1 im Wesentlichen dem Funktionsprinzip der zuvor beschriebenen Schlosszungen entspricht. Die Schlosszunge 1 weist ähnlich der zweiten Ausführungsform einen Torsionsstab 13 auf, welcher eine in die Durchlaufstellung gerichtete Rückstellkraft beim Verschwenken des Klemmelements 4 auf dieses ausübt. Im Folgenden wird daher vor allem auf die Unterschiede zu der zuvor beschriebenen Ausführungsform eingegangen.

Das Klemmelement 4 weist seitlich außen an seinen Führungsabschnitten 9 Führungselemente 23 auf. Der Zungenkörper 3 weist an in Richtung der Ausnehmung 5 gerichteten seitlichen Innenseiten den Führungselementen 23 entsprechende Führungsvertiefungen 24 auf, an die sich jeweils eine Montagevertiefung 25 anschließt. Wie insbesondere aus der in Figur 13 dargestellten Schnittansicht hervorgeht, welche einen Schnitt durch die Schlosszunge 1 im Bereich des Führungselementes 23 und der Führungsvertiefung 24 zeigt, ist die Führungsvertiefung 24 in etwa halbringförmig ausgebildet, an die sich die geradlinige Montagevertiefung 25 anschließt. Durch die Montagevertiefungen 25 kann das Klemmelement 4 mit dem in etwa viertelringförmigen Führungselementen 23 in seine Montageposition gebracht werden. Zum Montieren wird das Klemmelement 4 beidseitig mit den Führungselementen 23 durch die Montagevertiefungen 25 linear verschoben, wobei das Klemmelement 4 durch anschließendes Verschwenken aufgrund der dann größeren Erstreckung der Führungselemente 23 in Projektion auf die Breite der Montagevertiefungen 25 gegen eine Rückverschiebung gesichert ist. Durch die Führungselemente 23 und die Führungsvertiefungen 24 wird somit eine Schwenklagerung des Klemmelements 4 in dem Zungenkörper 3 erreicht. Der in den Aufnahmen 28 in dem Klemmelement 4 angeordnete Torsionsstab 13 hat in diesem Zusammenhang nicht nur die Funktion, eine Rückstellkraft auf das verschwenkte Klemmelement 4 auszuüben, sondern auch die Funktion, das Klemmelement 4 gegen eine Rückverschiebung durch die Montagevertiefungen 25 bei entsprechend verschwenkter Stellung zu sichern.

Wie aus den Figuren 13 und 14 auch hervorgeht, besteht der Zungenkörper 3 aus einem metallischen Kern 26 und einem angespritzten Kunststoff 27. In Figur 14 ist eine Schnittansicht durch den Zungenkörper 3 im Bereich des Führungsabschnittes 9 gezeigt. Wie in Zusammenschau mit Figur 12 zu erkennen ist, ist der Führungsabschnitt 9 in einer in dem Kunststoff 27 ausgebildeten Aussparung 10 angeordnet, wobei das Klemmelement 4 im oberen Bereich der Ausnehmung 5 während der Schwenkbewegung gleitend an dem Kunststoff 27 anliegt.

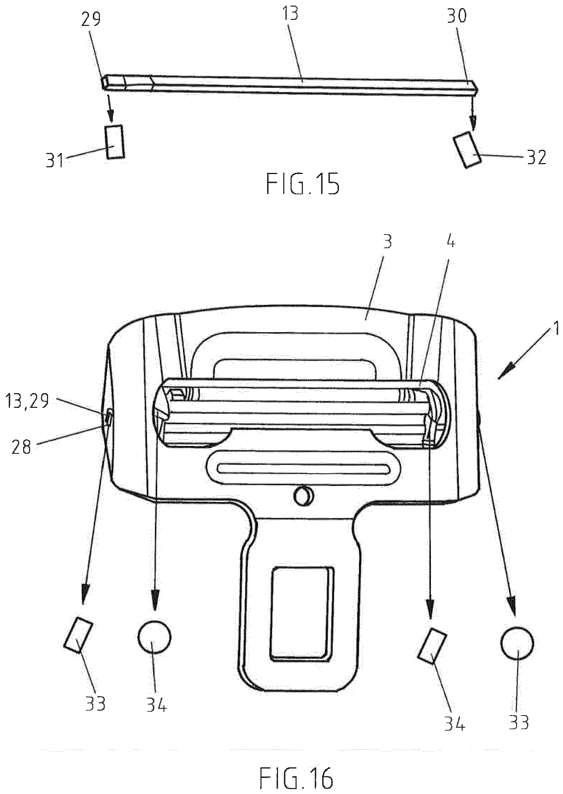

In Fig. 15 ist ein Torsionsstab 13 einer vierten, alle erfindungswesentlichen Merkmale aufweisenden Ausführungsform einer Schlosszunge 1 dargestellt. Der Torsionsstab 13 weist ein erstes Ende 29 und ein zweites Ende 30 auf. Im montierten Zustand wird der Torsionsstab 13 mit dem ersten Ende 29 in einer Aufnahme 28 eines Schlosskörpers 3 drehsicher festgelegt. Das zweite Ende 30 ist verdrehsicher zu einem Klemmelement 4, kann aber bezüglich einer weiteren Aufnahme in dem Schlosskörper 3 verdreht werden. Der Torsionsstab 13 weist im Bereich des ersten Endes 29 eine erste Querschnittskontur 31 und im Bereich des zweiten Endes 30 eine zweite Querschnittskontur 32 auf. Die Querschnittskonturen 31, 32 sind ihrer Form nach identisch, wobei sie allerdings bezüglich einer Längsachse des Torsionsstabes 13 zueinander rotatorisch versetzt sind. Der Torsionsstab 13 geht von dem ersten Ende 29 kontinuierlich unter Beibehaltung der Querschnittsform zu dem zweiten Ende 30 über, wobei sich die Ausrichtung der Querschnittsform ändert.

In Fig. 16 ist die Schlosszunge 1 mit montiertem Klemmelement 4 und montiertem Torsionsstab 13 dargestellt. Der Zungenkörper 3 der Schlosszunge 1 weist an seinen seitlichen Wänden Aufnahmen 28 auf, deren Aufnahmequerschnitte 33 unten in Fig. 16 jeweils außen dargestellt sind. Auf der linken Seite weist die Aufnahme 28 einen Aufnahmequerschnitt 33 auf, der in seiner Form der Querschnittsform des Torsionsstabes 13 entspricht. Auf der linken Seite weist die Aufnahme 28 einen kreisrunden Aufnahmequerschnitt 33 auf, so dass der Torsionsstab 13 mit seinem zweiten Ende 30 in dieser Aufnahme 28 rotieren kann. Das Klemmelement 4 weist einen Kanal zur Aufnahme des Torsionsstabes 13 auf, dessen Kanalquerschnitt 34 unten in Figur 16 angedeutet ist. Auf der linken Seite weist der Querschnitt des Kanals eine kreisrunde Form auf, während auf der rechten Seite der Querschnitt des Kanals eine der Querschnittskontur des Torsionsstabs 13 entsprechende rechteckige Form aufweist.

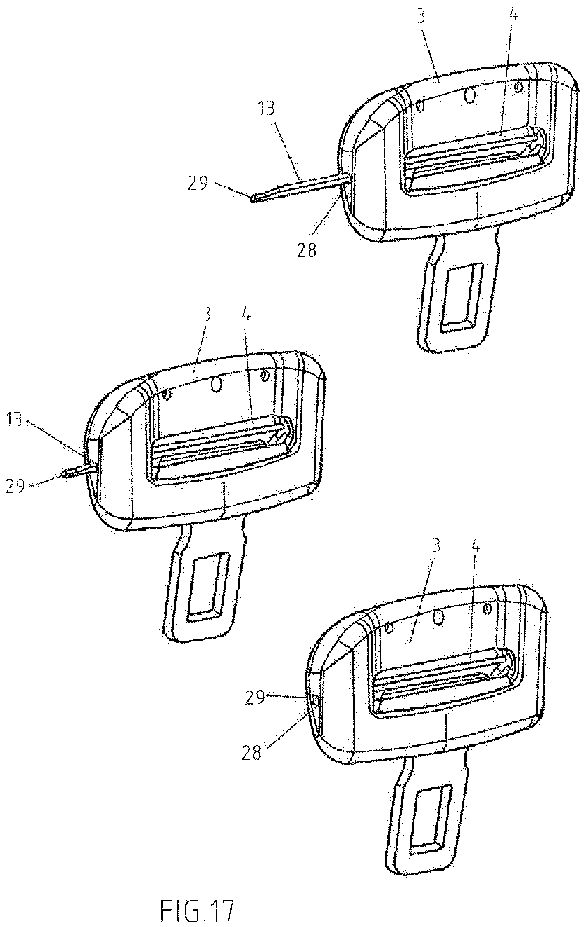

Bei der in Figur 17 von oben nach unten angedeuteten Montage des Torsionsstabes 13 wird der Torsionsstab 13 zunächst mit seinem zweiten Ende 30 durch die Aufnahme 28 hindurch in den Kanal des Klemmelements 4 eingeführt. Das Klemmelement 4 kann hierbei zunächst in einer beliebigen Ausrichtung sein, da der Torsionsstab 13 auf der in der Figur dargestellten linken Seite aufgrund des kreisrunden Kanalquerschnitts 34 relativ zu dem Klemmelement 4 verdrehbar ist. Um den Torsionsstab 4 weiter in das Klemmelement 4 einzuschieben, sollte sich das Klemmelement 4 in seiner Durchlaufstellung befinden, damit das zweite Ende 30 des Torsionsstabes 13 in den an die Querschnittskontur des zweiten Endes 30 angepassten Kanal eingreifen kann. Damit nun das erste Ende 29 des Torsionsstabes 13 in die Aufnahme 28 in dem Zungenkörper 3 eingeführt werden kann, muss der eine verdrillte Form aufweisende Torsionsstab 13 mit seinem ersten Ende 29 gegenüber dem gegen eine Relativdrehung in dem Klemmelement 4 festgelegten zweiten Ende 30 verdreht werden, wodurch ein Torsionsmoment in dem Torsionsstab 13 erzeugt wird. Die daraus resultierende Rückstellkraft ist in die Durchlaufstellung des Klemmelements 4 gerichtet.

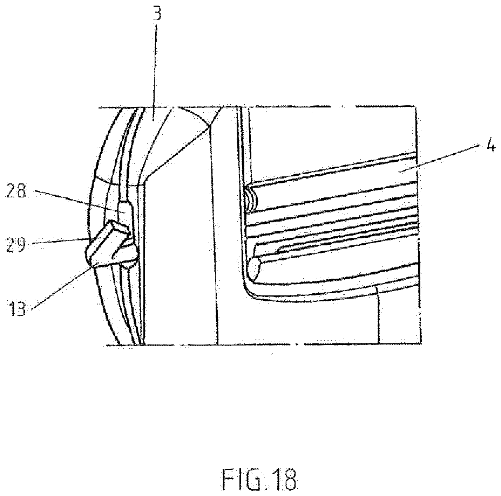

In der noch weiteren, alle erfindungswesentlichen Merkmale aufweisenden Ausführungsform gemäß Figur 18 ist der Torsionsstab 13 im Bereich seines ersten Endes 29 abgewinkelt. Der mit seinem zweiten Ende 30 bereits drehfest zu dem Klemmelement 4 festgelegte Torsionsstab 13 muss mit dem ersten Ende 29 relativ zu dem zweiten Ende 30 verdreht werden, damit das abgewinkelte Ende 29 in die entsprechend ausgebildete Aufnahme 28 in dem Schlosskörper 3 eingreifen kann. Auch mit dieser Ausführungsform wird eine schon in der Durchlaufstellung vorhandene Vorspannung erzeugt.

### Bezugszeichenliste

- 1: Schlosszunge
- 2: Einsteckrichtung
- 3: Zungenkörper
- 4: Klemmelement
- 5: Ausnehmung
- 6: Spalt
- 7: Gurtband
- 8: Klemmkante
- 9: Führungsabschnitt
- 10: Aussparung
- 11: Nocken
- 12: Blattfeder
- 13: Torsionsstab
- 14: Vorsprung
- 15: Nut
- 16: Stirnfläche
- 17: Anlagestelle
- 18: Lagerstift
- 19: seitliche Kante
- 20: erste Seite
- 21: zweite Seite
- 22: Klemmbereich
- 23: Führungselement
- 24: Führungsvertiefung
- 25: Montagevertiefung
- 26: Kern
- 27: Kunststoff
- 28: Aufnahme
- 29: erstes Ende
- 30: zweites Ende
- 31: erste Querschnittskontur
- 32: zweite Querschnittskontur
- 33: Aufnahmequerschnitt
- 34: Kanalquerschnitt

## Patentansprüche

1. Schlosszunge (1) mit einem sich in eine Einsteckrichtung (2) erstreckenden Zungenkörper (3), in dem ein Klemmelement (4) derart angeordnet ist, dass ein durch eine Ausnehmung (5) in dem Zungenkörper (3) geführtes und durch einen zwischen dem Klemmelement (4) und dem Zungenkörper (3) ausgebildeten Spalt (6) verlaufendes Gurtband (7) in einer unbelasteten Durchlaufstellung durch den Zungenkörper (3) beweglich und in einer durch eine in das Gurtband (7) eingeleitete Zugkraft herbeigeführten Belastungsstellung mittels des schwenkbar in dem Zungenkörper (3) gelagerten, in die Ausnehmung (5) hinein schwenkbaren Klemmelementes (4) an einer Klemmkante (8) der Ausnehmung (5) geklemmt ist, wobei zumindest in der Belastungsstellung eine Vorspanneinrichtung auf das Klemmelement (4) eine in Richtung der Durchlaufstellung des Klemmelements (4) gerichtete Rückstellkraft ausübt, **dadurch gekennzeichnet, dass** die Vorspanneinrichtung ein drehfest in dem Zungenkörper (3) befestigter und drehfest mit dem Klemmelement (4) verbundener Torsionsstab (13) ist, der beim Verschwenken des Klemmelements (4) um seine Längsachse elastisch verdreht wird.

2. Schlosszunge (1) nach Anspruch 1, wobei der Torsionsstab (13) nur an einer Seite des Zungenkörpers (3) drehfest befestigt und nur an der Seite des Klemmelements (4) mit dem Klemmelement (4) verbunden ist, welche nicht der mit dem Torsionsstab (13) befestigten Seite des Zungenkörpers (3) zugeordnet ist.

3. Schlosszunge (1) nach Anspruch 1 oder 2, **dadurch gekennzeichnet, dass** seitlich an dem Klemmelement (5) Führungsabschnitte (9) angeordnet sind, zwischen denen das Gurtband (7) verläuft, so dass das Gurtband (7) im seitlichen Bereich der Ausnehmung (5) nicht zwischen das Klemmelement (4) und den Zungenkörper (3) gelangt, wobei die Ausnehmung (5) seitlich von der Klemmkante (8) ausgebildete, in Einsteckrichtung (2) ausgerichtete Aussparungen (10) umfasst, in denen die Führungsabschnitte (9) des Klemmelements (4) zumindest in der Belastungsstellung angeordnet sind.

4. Schlosszunge (1) nach einem der vorhergehenden Ansprüche, **dadurch gekennzeichnet, dass** an dem Zungenkörper (3) mindestens ein in die Ausnehmung (5) hineinragender Vorsprung (14) und an dem Klemmelement (4) mindestens eine Nut (15) ausgebildet ist, in die der Vorsprung (14) zumindest während der Schwenkbewegung eingreift, so dass in der Belastungsstellung der Vorsprung (14) an einer Stirnfläche (16) der Nut (15) in Anlage mit dem Klemmelement (4) kommt und dadurch die Schwenkbewegung des Klemmelementes (4) begrenzt ist.

5. Schlosszunge (1) nach Anspruch 3, **dadurch gekennzeichnet, dass** von beiden Führungsabschnitten (9) seitlich jeweils ein Führungselement (23) hervorsteht, die in den Torsionstab (13) aufnehmenden Aufnahmen (28) zumindest teilweise umgebenden Führungsvertiefungen (24) in dem Zungenkörper (3) angeordnet sind, wobei die Führungselemente (23) und die Führungsvertiefungen (24) so geformt sind, dass die Schwenkbewegung des Klemmelements (4) von den in den Führungsvertiefungen (24) bewegten Führungselementen (23) geführt ist.

6. Schlosszunge (1) nach Anspruch 5, wobei sich an die Führungsvertiefungen (24) jeweils eine geradlinige, bis zu einem Rand des Zungenkörpers (3) erstreckende Montagevertiefung (25) anschließt, durch welche das Klemmelement (4) während der Montage mit dem Führungselementen (23) linear verschoben wird, wobei das Klemmelement (4) durch anschließendes Verschwenken gegen eine Rückverschiebung gesichert wird.

7. Schlosszunge (1) nach einem der vorhergehenden Ansprüche, wobei das Gurtband (7) quer zur Einsteckrichtung (2) einfach durch die Ausnehmung (5) in dem Zungenkörper (3) gezogen ist.

8. Schlosszunge (1) nach einem der vorhergehenden Ansprüche, wobei der Torsionsstab (13) bereits in der Durchlaufstellung eine entgegen der Belastungsstellung gerichtete Kraft auf das Klemmelement (4) ausübt.

9. Schlosszunge (1) nach Anspruch 8, wobei eine den Torsionsstab (13) am Zungenkörper (3) drehfestlegende Aufnahme (28) und der Torsionsstab (13) so ausgebildet sind, dass ein in der Aufnahme (28) festzulegendes erstes Ende (29) des Torsionsstabes (13) zum Festlegen an dem Zungenkörper (3) gegenüber dem an dem Klemmelement (4) drehfestgelegten zweiten Ende (30) verdreht werden muss, während sich das Klemmelement (4) in der Durchlaufstellung befindet.

10. Schlosszunge (1) nach Anspruch 9, wobei der Torsionsstab (13) an dem in der Aufnahme (28) festzulegenden ersten Ende (23) eine erste Querschnittskontur (31) aufweist, die einer zweiten Querschnittskontur (32) des in dem Klemmelement drehfestgelegten zweiten Endes (30) in der Querschnittsform entspricht, wobei in einem entspannten Zustand des Torsionsstabes (13) die Querschnittskonturen (31, 32) der beiden Enden (29, 30) um eine Drehachse versetzt zueinander sind und der Übergang von der ersten Querschnittskontur (31) zur zweiten Querschnittskontur (32) unter Beibehaltung der Querschnittsform kontinuierlich ist, so dass der Torsionsstab (13) bei in dem Klemmelement (4) drehfestgelegtem zweiten Ende (30) ausschließlich durch Einschieben des ersten Endes (29) in die Aufnahme (28) verdreht wird.

## Claims

1. Lock tongue (1) with a tongue body (3), which extends in an insertion direction (2) and in which a clamping element (4) is arranged in such a way that a belt strap (7), which is led through a recess (5) in the tongue body (3) and runs through a slot (6) formed between the clamping element (4) and the tongue body (3), is movable through the tongue body (3) in an unloaded passage position and in a loading position brought about by a tensile force introduced into the belt strap (7) is clamped by means of the clamping element (4), which is supported pivotably in the tongue body (3) and is pivotable into the recess (5), on a clamping edge (8) of the recess (5), wherein at least in the loading position a pretensioning device exerts a reset force directed in the direction of the passage position of the clamping element (4) on the clamping element (4), **characterised by** that the pretensioning device is a torsion rod (13), which is fastened non-rotatably in the tongue body (3) and is connected non-rotatably to the clamping element (4) and is twisted elastically about its longitudinal axis upon pivoting of the clamping element (4).

2. Lock tongue (1) according to claim 1, wherein the torsion rod (13) is fastened non-rotatably only on one side of the tongue body (3) and is connected to the clamping element (4) only on the side of the clamping element (4) that is not associated with the side of the tongue body (3) fastened to the torsion rod (13).

3. Lock tongue (1) according to claim 1 or 2, **characterised by** that guide sections (9) are arranged laterally on the clamping element (4), between which sections the belt strap (7) runs, so that the belt strap (7) does not pass between the clamping element (4) and the tongue body (3) in the lateral region of the recess (5), wherein the recess (5) comprises recesses (10) formed to the side of the clamping edge (8) and oriented in the insertion direction (2), in which recesses the guide sections (9) of the clamping element (4) are arranged at least in the loading position.

4. Lock tongue (1) according to any one of the preceding claims, **characterised by** that at least one projection (14) protruding into the recess (5) is formed on the tongue body (3) and at least one groove (15) is formed on the clamping element (4), into which groove the projection (14) engages at least during the pivot movement, so that in the loading position the projection (14) comes into contact with the clamping element (4) on an end face (16) of the groove (15) and the pivot movement of the clamping element (4) is limited by this.

5. Lock tongue (1) according to claim 3, **characterised by** that a guide element (23) protrudes laterally in each case from both guide sections (9), the at least partially surrounding guide indentations (24) in recesses (28) taking up the torsion rod (13) are arranged in the tongue body (3), wherein the guide elements (23) and the guide indentations (24) are formed so that the pivot movement of the clamping element (4) is guided by the guide elements (23) moved in the guide indentations (24).

6. Lock tongue (1) according to claim 5, wherein a straight assembly indentation (25) extending up to an edge of the tongue body (3) connects in each case to the guide indentations (24), through which assembly indentation the clamping element (4) is moved linearly during assembly with the guide elements (23), wherein the clamping element (4) is secured against a backward displacement by subsequent pivoting.

7. Lock tongue (1) according to any one of the preceding claims, wherein the belt strap (7) is drawn transversely to the insertion direction (2) simply through the recess (5) in the tongue body (3).

8. Lock tongue (1) according to any one of the preceding claims, wherein the torsion rod (13) already exerts a force directed counter to the loading position on the clamping element (4) in the passage position.

9. Lock tongue (1) according to claim 8, wherein a recess (28) placing the torsion rod (13) non-rotatably on the tongue body (3) and the torsion rod (13) are formed so that a first end (29) of the torsion rod (13) to be fixed in the recess (28) must be twisted relative to the second end (30) placed non-rotatably on the clamping element (4) for fixing on the tongue body (3), while the clamping element (4) is located in the passage position.

10. Lock tongue (1) according to claim 9, wherein the torsion rod (13) has at the first end (29) to be fixed in the recess (28) a first cross-sectional contour (31), which corresponds in the cross-sectional shape to a second cross-sectional contour (32) of the second end (30) placed non-rotatably in the clamping element, wherein in a slackened state of the torsion rod (13) the cross-sectional contours (31, 32) of the two ends (29, 30) are offset relative to one another about an axis of rotation and the transition from the first cross-sectional contour (31) to the second cross-sectional contour (32) is continuous, retaining the cross-sectional shape, so that when the second end (30) is placed non-rotatably in the clamping element (4), the torsion rod (13) is twisted exclusively by insertion of the first end (29) into the recess (28).

## Revendications

1. Languette de boucle (1) présentant un corps de languette (3) s'étendant dans un sens d'emboîtement (2) et dans lequel un élément de blocage (4) est installé de manière qu'une sangle de ceinture (7), passant dans un évidement (5) réalisé dans le corps de languette (3) et traversant une fente (6) créée entre l'élément de blocage (4) et le corps de languette (3), puisse, dans une position de passage sans charge, librement passer dans le corps de languette (3), et de manière qu'elle soit bloquée, sur une arête de blocage (8) de l'évidement (5), au moyen de l'élément de blocage (4) monté dans le corps de languette (3) et susceptible de pivoter dans l'évidement (5), dans une position sous charge imputable à une force de traction transmise à la sangle de ceinture (7) ; un dispositif de précontrainte exerçant sur l'élément de blocage (4), au moins dans la position sous charge, une force de rappel dirigée dans le sens de la position de passage de l'élément de blocage (4) ; **caractérisée en ce que** le dispositif de précontrainte consiste en une barre de torsion (13) fixée solidaire en rotation dans le corps de languette (3) en étant reliée solidaire en rotation à l'élément de blocage (4) et subissant une torsion élastique lors du pivotement de l'élément de blocage (4) autour de son axe longitudinal.

2. Languette de boucle (1) selon la revendication 1, dans laquelle la barre de torsion (13) est fixée solidaire en rotation uniquement sur un côté du corps de languette (3) et est reliée à l'élément de blocage (4) uniquement sur le côté de l'élément de blocage (4) qui n'est pas associé au côté du corps de languette (3) qui est fixé à la barre de torsion (13).

3. Languette de boucle (1) selon la revendication 1 ou 2, **caractérisée en ce que** l'élément de blocage (4) présente latéralement des sections de guidage (9) entre lesquelles passe la sangle de ceinture (7) et qui évitent que la sangle de ceinture (7) s'introduise entre l'élément de blocage (4) et le corps de languette (3) dans la zone latérale de l'évidement (5), ledit évidement (5) comprenant des concavités (10) latérales par rapport à l'arête de blocage (8), dirigées dans le sens de l'emboîtement (2) et dans lesquelles sont agencées les sections de guidage (9) de l'élément de blocage (4), au moins dans la position sous charge.

4. Languette de boucle (1) selon l'une quelconque des revendications précédentes, **caractérisée en ce qu'**au moins une saillie (14) ressortant dans l'évidement (5) est prévue sur le corps de languette (3) et au moins une rainure (15) est prévue sur l'élément de blocage (4), ladite saillie (14) pénétrant dans ladite rainure au moins pendant le mouvement de pivotement si bien que, dans la position sous charge, la saillie (14) vient en butée avec l'élément de blocage (4) sur une surface avant (16) de la rainure (15) et limite ainsi le mouvement de pivotement de l'élément de blocage (4).

5. Languette de boucle (1) selon la revendication 3, **caractérisée en ce qu'**un élément de guidage (23) respectif fait latéralement saillie sur les deux sections de guidage (9), lesdits éléments de guidage étant agencés dans des creux de guidage (24) réalisés dans le corps de languette (3) et entourant au moins partiellement des logements (28) recevant la barre de torsion (13) ; les éléments de guidage (23) et les creux de guidage (24) étant constitués de manière que le mouvement de pivotement de l'élément de blocage (4) soit guidé par les éléments de guidage (23) déplacés dans les creux de guidage (24).

6. Languette de boucle (1) selon la revendication 5, dans laquelle un creux de montage (25) droit, allant jusqu'à un bord du corps de languette (3), communique avec un creux de guidage (24) respectif et permet le transfert linéaire de l'élément de blocage (4), par les éléments de guidage (23), pendant le montage, un pivotement subséquent dudit élément de blocage (4) permettant de le protéger de tout retrait par coulissement inverse.

7. Languette de boucle (1) selon l'une quelconque des revendications précédentes, dans laquelle la sangle de ceinture (7) est simplement amenée dans l'évidement (5) du corps de languette (3) perpendiculairement au sens de l'emboîtement (2).

8. Languette de boucle (1) selon l'une quelconque des revendications précédentes, dans laquelle la barre de torsion (13), dès la position de passage, exerce une force sur l'élément de blocage (4) qui est dirigée à l'encontre de la position sous charge.

9. Languette de boucle (1) selon la revendication 8, dans laquelle la barre de torsion (13) ainsi qu'un logement (28) servant à immobiliser, sans possibilité de rotation, la barre de torsion (13) au niveau du corps de languette (3) sont conçus de manière qu'une première extrémité (29), destinée à être immobilisée dans le logement (28), de la barre de torsion (13) destinée à être installée dans le corps de languette (3), doive subir une torsion par rapport à la deuxième extrémité (30) immobilisée sans possibilité de rotation au niveau de l'élément de blocage (4), pendant que l'élément de blocage (4) se trouve dans la position de passage.

10. Languette de boucle (1) selon la revendication 9, dans laquelle la barre de torsion (13) présente, sur la première extrémité (29) destinée à être immobilisée dans le logement (28), un premier contour transversal (31) correspondant à la forme d'un deuxième contour transversal (32) de la deuxième extrémité (30) immobilisée sans possibilité de rotation dans l'élément de blocage, et dans laquelle, dans un état relâché de la barre de torsion (13), les contours transversaux (31, 32) des deux extrémités (29, 30) sont décalés l'un par rapport à l'autre autour d'un axe de rotation et le passage du premier contour transversal (31) au deuxième contour transversal (32) est continu, avec conservation de la forme transversale, si bien que la barre de torsion (13), lorsque la deuxième extrémité (30) est immobilisée sans possibilité de rotation dans l'élément de blocage (4), subit une torsion exclusivement lorsque la première extrémité (29) vient s'introduire dans le logement (28).
